(19) Europäisches Patentamt / European Patent Office / Office européen des brevets

(11) **EP 4 192 713 B1**

(12) **EUROPEAN PATENT SPECIFICATION**

(45) Date of publication and mention
of the grant of the patent:
**24.04.2024  Bulletin 2024/17**

(21) Application number: **20764943.5**

(22) Date of filing: **10.08.2020**

(51) International Patent Classification (IPC):
**B60W 30/095** (2012.01)       **B60W 30/12** (2020.01)
**B60W 60/00** (2020.01)       **G01S 13/931** (2020.01)

(52) Cooperative Patent Classification (CPC):
**B60W 30/12; B60W 30/0956; B60W 60/00272;
B60W 60/00276; G01S 17/58; G01S 17/86;
G01S 17/931;** B60W 2554/4041; B60W 2554/4042;
B60W 2554/802; B60W 2554/804; G01S 13/865;
G01S 13/867; G01S 2013/932; G01S 2013/9323

(86) International application number:
**PCT/EP2020/025368**

(87) International publication number:
**WO 2022/033650 (17.02.2022 Gazette 2022/07)**

(54) **DEVICE FOR AND METHOD OF PREDICTING A TRAJECTORY FOR A VEHICLE**

VORRICHTUNG UND VERFAHREN ZUR VORHERSAGE EINER TRAJEKTORIE FÜR EIN FAHRZEUG

DISPOSITIF ET PROCÉDÉ DE PRÉDICTION D'UNE TRAJECTOIRE POUR UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023  Bulletin 2023/24**

(73) Proprietor: **Dr. Ing. h.c. F. Porsche
Aktiengesellschaft
70435 Stuttgart (DE)**

(72) Inventor: **BERECZ, Gabriel
400000  Cluj Napoca (RO)**

(56) References cited:
**EP-A1- 2 251 240        CN-A- 107 672 589
US-A1- 2019 092 328**

• **ERIC RICHTER ET AL: "Radar and vision based
data fusion - Advanced filtering techniques for a
multi object vehicle tracking system",
INTELLIGENT VEHICLES SYMPOSIUM, 2008
IEEE, IEEE, PISCATAWAY, NJ, USA, 4 June 2008
(2008-06-04), pages 120-125, XP031318890, ISBN:
978-1-4244-2568-6**

# Description

The invention concerns a device for and method of predicting a trajectory for a vehicle.

CN 107 672 589 A discloses a method according to the preamble of claim 1. Furthermore, CN 108803617 discloses aspects of a related device using an artificial neural network.

It is desirable to improve the prediction further.

This is achieved by a method and device according to claims 1 and 10.

The method of predicting trajectory for a vehicle comprises that depending on first data, that is captured by a first sensor of a first vehicle, a first position, a first acceleration, a first velocity and a first yaw rate of a second vehicle is determined, wherein depending on the first position, the first acceleration, the first velocity and the first yaw rate a first list of points for a prediction of the trajectory is determined with a vehicle model, depending on second data, that is captured by a second sensor of the first vehicle, a second position, a second acceleration, a second velocity and a second yaw rate of the second vehicle is determined, wherein depending on the second position, the second acceleration, the second velocity and the second yaw rate a second list of points for the prediction of the trajectory is determined with the vehicle model, wherein parameters of a model for the prediction of the trajectory are determined depending on the first list of points and the second list of points, and wherein the prediction of the trajectory is determined depending on the model defined by these parameters. Unless a history for the second vehicle is available, the data of each of the sensors is used independently to determine the position, acceleration, velocity and yaw rate. The vehicle model for this may be a CYRA model. By this, the list of points for each sensor is determined independently from the other sensor data. The prediction is determined by fitting a curve to these points. The resulting prediction for the trajectory fits very well to the actual trajectory of the second vehicle.

Preferably, depending on first data, captured by the first sensor in a predetermined first period of time, a first list of positions of the second vehicle in the first period of time is determined, wherein depending on second data captured by the second sensor in the predetermined first period of time, a second list of positions of the second vehicles in the first period of time is determined, wherein the parameters of the model are determined depending on the first list of positions and the second list of positions. If a history is available for the second vehicle, position from a previous trajectory of the second vehicle are used to improve the curve fitting further.

Preferably, a length of the first period of time is between 0,1 to 5 seconds, preferably 1 second.

Preferably, depending on third data, that is captured by the first sensor of the first vehicle, a third position, a third acceleration, a third velocity and a third yaw rate of a third vehicle is determined, wherein depending on the third position, the third acceleration, the third velocity and the third yaw rate a third list of points for a prediction of the trajectory is determined with the vehicle model, wherein depending on fourth data, that is captured by the second sensor of the first vehicle, a fourth position, a fourth acceleration, a fourth velocity and a fourth yaw rate of the fourth vehicle is determined, wherein depending on the fourth position, the fourth acceleration, the fourth velocity and the fourth yaw rate a fourth list of points for the prediction of the trajectory is determined with the vehicle model, wherein the parameters for the prediction of the trajectory of the second vehicle are determined depending on the first list of points, the second list of points, the third list of points and the fourth list of points, and/or wherein parameters for the prediction the trajectory of the third vehicle are determined depending on the first list of points, the second list of points, the third list of points and the fourth list of points with a model for the prediction of the trajectory of the third vehicle. This improves the prediction because the trajectory is predicted based on the third vehicle as well. Preferably data of a plurality of vehicles surrounding the first vehicle is captured an used alike.

Preferably, depending on third data, captured by the first sensor in the predetermined first period of time, a third list of positions of the third vehicle in the first period of time is determined, wherein depending on fourth data, captured by the second sensor in the predetermined first period of time, a fourth list of positions of the third vehicle in the first period of time is determined, wherein the parameters of the model for the second vehicle and/or the parameter for the model for the third vehicle are determined depending on the first list of positions, the second list of positions, the third list of positions and the fourth list of positions. This improves the curve fitting further.

Preferably, the first sensor and the second sensor are different sensors of the group radar sensor, camera and LiDAR-sensor.

Preferably, the parameters are determined by a least squares method.

Preferably, the prediction of the trajectory is determined by quadratic programming.

Preferably, the prediction of the trajectory is determined depending on the vehicle model for a second period of time of up to 0,4 seconds in advance and/or depending on the vehicle model and depending on data captured in the first period of time for a third period of time between 0,4 and 5 seconds in advance. The device for predicting a trajectory of a vehicle comprises a processor adapted to process input data from at least one of two different sensors of the group of radar sensor, camera and LiDAR-sensor and to execute the method.

Further advantageous embodiments are derivable from the following description and the drawing. In the drawing:

Fig. 1 schematically depicts a road,

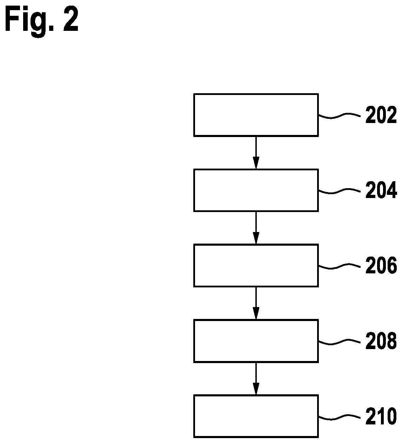

Fig. 2 depicts steps in a method for predicting a trajectory.

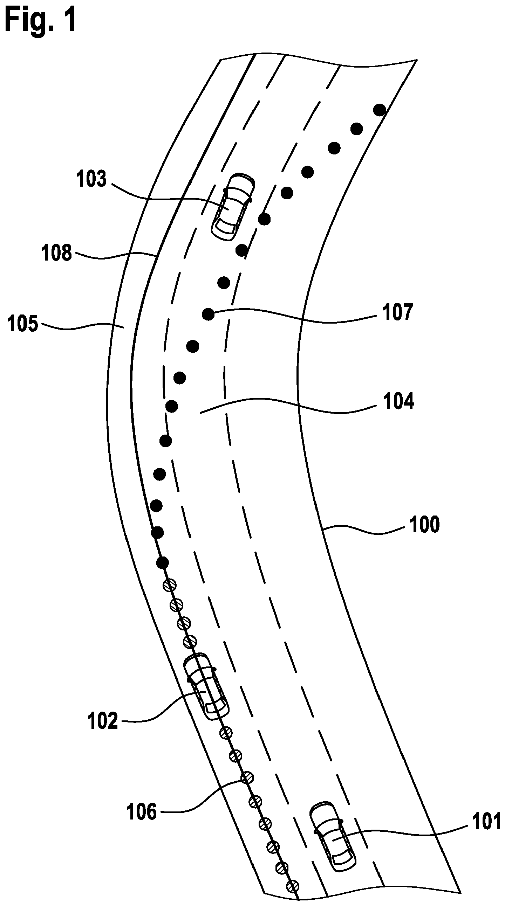

Figure 1 depicts a road 100, a first vehicle 101, a second vehicle 102 and a third vehicle 103.

The first vehicle 101 comprises a device for predicting a trajectory of the second vehicle 102 and/or the third vehicles 103.

The device comprises a processor adapted to process input data of at least two different sensors of the group of radar sensor, camera and LiDAR-sensor and to perform the steps of the method described below.

The first vehicle 101 comprises in the example a first sensor and a second sensor. The first sensor and the second sensor are in the example different sensors of the group radar sensor, camera and LiDAR-sensor.

The first sensor is in the example a camera. The second sensor in the example a radar sensor. A third sensor, e.g. the LiDAR-sensor may be provided as well.

The first vehicle 101 moves in the example on a middle lane 104 of three lanes of the road 100. The second vehicle moves in the example on a lane 105 left of the middle lane 104 in direction of travel of the first vehicle 101 and of the second vehicle 102. The third Vehicle 103 moves in the example on the middle lane 104.

Depicted in figure 1 is a historic trajectory 106 for the second vehicle 102. Depicted in figure 1 is trajectory 107 predicted by the vehicle model for the second vehicle 102. Depicted in figure 1 is a prediction for the trajectory 108 that has been determined by the method described below for the second vehicle.

The method for predicting the trajectory 108 for the second vehicle 102 comprises, a step 202 of:

a) capturing first data with the first sensor of the first vehicles 101, characterizing a first position, a first acceleration, a first velocity and a first yaw rate of the second vehicle 102;

b) capturing second data with the second sensor of the first vehicles 101, characterizing a second position, a second acceleration, a second velocity and a second yaw rate of the second vehicle 102.

The method may comprise capturing with the first sensor third data,
characterizing a third position, a third acceleration, a third velocity and a third yaw rate of the third vehicle 103.

The method may comprise capturing with the second sensor fourth data, characterizing a fourth position, a fourth acceleration, a fourth velocity and a fourth yaw rate of the third vehicle 103.

The method may comprise capturing with the first sensor and the second sensor data in a predetermined first period of time.

A length of the first period of time may be between 0,1 and 5 seconds and is preferably 1 second. In the first perios of time a first list of positions, a second list of positions, a third list of positions and/or a fourth list of positions may be determined.

The method comprises a step 204 of:

a) determining depending on the data of the first sensor for the second vehicle 102 the first position, the first acceleration, the first velocity and the first yaw rate of the second vehicle 102.

b) determining depending on the data of the second sensor for the second vehicle 102 the second position, the second acceleration, the second velocity and the second yaw rate of the second vehicle 102.

The method may comprise, determining depending on the data of the first sensor for the third vehicle 103 the third position, the third acceleration, the third velocity and the third yaw rate of the third vehicles 103.

The method may comprise, determining depending on the data of the second sensor for the third vehicle 103 the fourth position, the fourth acceleration, the fourth velocity and the fourth yaw rate of the third vehicles 103.

The method comprises a step 206 of:

a) determining with the vehicle model depending on the first position, the first acceleration, the first velocity and the first yaw rate a first list of points for the prediction of the trajectory 108,

b) determining with the vehicle model depending on the second position, the second acceleration, the second velocity and the second yaw rate a second list of points for the prediction of the trajectory 108.

The method may comprise, determining with the vehicle model depending on the third position, the third acceleration, the third velocity and the third yaw rate a third list of points for the prediction of a trajectory for the third vehicle 103.

The method may comprise, determining with the vehicle model depending on the fourth position, the fourth acceleration, the fourth velocity and the fourth yaw rate a fourth list of points for the prediction of the trajectory for the third vehicle 103.

The vehicle model in the example is a CYRA model.

The method comprises a step 208 of determining depending on the first list of points and the second list of points, parameter of a model for the prediction the trajectory 108 for the second vehicle 102.

The parameter for the prediction of the trajectory 108 of the second vehicle 102 may be determined depending on the first list of points, the second list of points, the third list of points and the fourth list of points with the model for the prediction of the trajectory 108 of the second vehicle 102.

The method may comprise, determining the parameter for the prediction of the trajectory of the third vehicle 103 depending on the first list of points, the second list of points, the third list of points and the fourth list of points with a model for the prediction the trajectory of the third vehicle 103.

The parameter of the model for the second vehicle 102 and/or the parameter for the model for the third vehicle 103 may be determined depending on the first list of positions, the second list of positions, the third list of positions and the fourth list of positions.

The parameters may be estimated by the least squares method or by quadratic programming. The parameter define in the example a curve having a curvature K.

The method comprises a step 210 of determining the prediction of the trajectory 108 depending on the model that is defined by these parameter.

For each sensor a list of points for the prediction is determined independently of the other sensors. The prediction is based on a curve fitting to these points. If the history is available, the curve fitting considers the previous positions from available lists of positions as well.

The prediction for the trajectory 108 that is based on the vehicle model may be for a second period of time of up to 0,4 seconds in advance.

The prediction for the trajectory 108 that is based on the vehicle model and the data from the first period of time may be for a third period of time between 0,4 seconds and 5 seconds in advance.

In an example, for the prediction the trajectory 108 the yaw angle of the second vehicle 102 is estimated with quadratic programming, i.e. solving a quadratic optimization problem. The quadratic optimization problem in the example is defined assuming a constant acceleration:

$$K = \frac{|y''|}{[1 + (y')^2]^{\frac{3}{2}}}, \; R = \frac{1}{K}, \; R = \frac{v}{\omega},$$

wherein y is the solution to the quadratic optimization problem, R is a curve radius of the curve having the curvature K, v is the velocity and w the yaw rate of the second vehicle 102.

The quadratic optimization problem may be solved to estimate the yaw angle for the prediction the trajectory for the third vehicle 103. The prediction of the trajectory 108 for the second vehicle 102 may be determined depending on the data and depending on the parameter for the model for the second vehicle 102 and the model for the third vehicle 103. The quadratic optimization problem may be used for estimating yaw angles for the prediction of the trajectory for a plurality of vehicles. Assumptions about predicted paths of different vehicles captured by the sensors of the first vehicle 101 may be determined from the predictions of the trajectory of these vehicles and to improve the prediction of the trajectories for the vehicles.

**Claims**

1. Method of predicting a trajectory (108) for a vehicle (102), wherein depending on first data, that is captured (202) by a first sensor of a first vehicle (101), a first position, a first acceleration, a first velocity and a first yaw rate of a second vehicle (102) is determined (204), wherein depending on the first position, the first acceleration, the first velocity and the first yaw rate a first list of points for a prediction of the trajectory (108) is determined (206) with a vehicle model, **characterized in that** depending on second data, that is captured (202) by a second sensor of the first vehicle (101), a second position, a second acceleration, a second velocity and a second yaw rate of the second vehicle (102) is determined (204), wherein depending on the second position, the second acceleration, the second velocity and the second yaw rate a second list of points for the prediction of the trajectory (108) is determined (206) with the vehicle model, wherein parameters of a model for the prediction of the trajectory (108) are determined (208) depending on the first list of points and the second list of points, and wherein the prediction of the trajectory (108) is determined (210) depending on the model defined by these parameters (210).

2. The method according to claim 1, **characterized in that** depending on first data, captured (202) by the first sensor in a predetermined first period of time, a first list of positions of the second vehicle (102) in the first period of time is determined (204), wherein depending on second data captured (202) by the second sensor in the predetermined first period of time, a second list of positions of the second vehicles (102) in the first period of time is determined (204), wherein the parameters of the model are determined (208) depending on the first list of positions and the second list of positions.

3. The method according to claim 2, **characterized in that** a length of the first period of time is between 0,1 to 5 seconds, preferably 1 second.

4. The method according to one of the previous claims, **characterized in that** depending on third data, that is captured (202) by the first sensor of the first vehicle (101), a third position, a third acceleration, a third velocity and a third yaw rate of a third vehicle (103) is determined (204), wherein depending on the third position, the third acceleration, the third velocity and the third yaw rate a third list of points for a prediction of the trajectory (108) is determined (206) with the vehicle model, wherein depending on fourth data, that is captured (202) by the second sensor of the first vehicle (101), a fourth position, a fourth acceleration, a fourth velocity and a fourth yaw rate of the fourth vehicle (102) is determined (204), wherein depending on the fourth position, the fourth acceleration, the fourth velocity and the fourth yaw rate a fourth list of points for the prediction of the trajectory (108) is determined (206) with the vehicle model, wherein the parameters for the prediction of the trajectory (108) of the second vehicle (102) are determined (208) depending on the first list of points, the second list of points, the third list of points and the fourth list of points, and/or wherein parameters for the prediction the trajectory of the third vehicle (103) are determined (208) depending on the first list of points, the second list of points, the third list of points and the fourth list of points with a model for the prediction of the trajectory of the third vehicle (103).

5. The method according to claim 4, **characterized in that** depending on third data, captured (202) by the first sensor in the predetermined first period of time, a third list of positions of the third vehicle (103) in the first period of time is determined (204), wherein depending on fourth data, captured (202) by the second sensor in the predetermined first period of time, a fourth list of positions of the third vehicle (103) in the first period of time is determined (204), wherein the parameters of the model for the second vehicle (102) and/or the parameters for the model for the third vehicle (103) are determined (206) depending on the first list of positions, the second list of positions, the third list of positions and the fourth list of positions..

6. The method according to one of the previous claims, **characterized in that** the first sensor and the second sensor are different sensors of the group radar sensor, camera and LiDAR-sensor.

7. The method according to one of the previous claims, **characterized in that** the parameters are determined (206) by a least squares method

8. The method according to one of the previous claims, **characterized in that** the prediction of the trajectory (108) is determined (208) by quadratic programming.

9. The method according to one of the previous claims, **characterized in that** the prediction of the trajectory (108) is determined depending on the vehicle model for a second period of time of up to 0,4 seconds in advance and/or depending on the vehicle model and depending on data captured in the first period of time for a third period of time between 0,4 and 5 seconds in advance (210).

10. Device for predicting a trajectory of a vehicle (102), **characterized in that** the device comprises a processor adapted to process input data from at least one of two different sensors of the group of radar sensor, camera and LiDAR-sensor and to execute the method according to one of the claims the 1 to 9.

**Patentansprüche**

1. Verfahren zum Vorhersagen einer Bewegungsbahn (108) eines Fahrzeugs (102), wobei abhängig von ersten Daten, die von einem ersten Sensor eines ersten Fahrzeugs (101) erfasst (202) werden, eine erste Position, eine erste Beschleunigung, eine erste Geschwindigkeit und eine erste Gierrate eines zweiten Fahrzeugs (102) bestimmt (204) werden, wobei abhängig von der ersten Position, der ersten Beschleunigung, der ersten Geschwindigkeit und der ersten Gierrate eine erste Liste von Punkten für eine Vorhersage der Bewegungsbahn (108) mit einem Fahrzeugmodell bestimmt wird (206), **dadurch gekennzeichnet, dass** abhängig von zweiten Daten, die von einem zweiten Sensor des ersten Fahrzeugs (101) erfasst (202) werden, eine zweite Position, eine zweite Beschleunigung, eine zweite Geschwindigkeit und eine zweite Gierrate des zweiten Fahrzeugs (102) bestimmt (204) werden, wobei abhängig von der zweiten Position, der zweiten Beschleunigung, der zweiten Geschwindigkeit und der zweiten Gierrate eine zweite Liste von Punkten für die Vorhersage der Bewegungsbahn (108) mit dem Fahrzeugmodell bestimmt (206) wird, wobei Parameter eines Modells für die Vorhersage der Bewegungsbahn (108) abhängig von der ersten Liste von Punkten und der zweiten Liste von Punkten bestimmt (208) werden, und wobei die Vorhersage der Bewegungsbahn (108) abhängig von dem durch diese Parameter (210) definierten Modell bestimmt (210) wird.

2. Verfahren nach Anspruch 1, **dadurch gekennzeichnet, dass** abhängig von ersten Daten, die durch den ersten Sensor in einem vorbestimmten ersten Zeitraum erfasst (202) werden, eine erste Liste von Positionen des zweiten Fahrzeugs (102) in dem ersten Zeitraum bestimmt (204) wird, wobei abhängig von zweiten Daten, die von dem zweiten Sensor in dem vorbestimmten ersten Zeitraum erfasst werden (202), eine zweite Liste von Positionen des zweiten Fahrzeugs (102) in dem ersten Zeitraum bestimmt (204) wird, wobei die Parameter des Modells abhängig von der ersten Liste von Positionen und der zweiten Liste von Positionen bestimmt (208) werden.

3. Verfahren nach Anspruch 2, **dadurch gekennzeichnet, dass** eine Länge des ersten Zeitraums zwischen 0,1 und 5 Sekunden, vorzugsweise 1 Sekunde, beträgt.

4. Verfahren nach einem der vorhergehenden Ansprüche, **dadurch gekennzeichnet, dass** abhängig von dritten Daten, die durch den ersten Sensor des ersten Fahrzeugs (101) erfasst (202) werden, eine dritte Position, eine dritte Beschleunigung, eine dritte Geschwindigkeit und eine dritte Gierrate eines dritten Fahrzeugs (103) bestimmt (204) werden, wobei abhängig von der dritten Position, der dritten Beschleunigung, der dritten Geschwindigkeit und der dritten Gierrate eine dritte Liste von Punkten für eine Vorhersage der Bewegungsbahn (108) mit dem Fahrzeugmodell bestimmt (206) wird, wobei abhängig von vierten Daten, die durch den zweiten Sensor des ersten Fahrzeugs (101) erfasst (202) werden, eine vierte Position, eine vierte Beschleunigung, eine vierte Geschwindigkeit und eine vierte Gierrate des vierten Fahrzeugs (102) bestimmt (204) werden, wobei abhängig von der vierten Position, der vierten Beschleunigung, der vierten Geschwindigkeit und der vierte Gierrate eine vierte Liste von Punkten für die Vorhersage der Bewegungsbahn (108) mit dem Fahrzeugmodell bestimmt (206) wird, wobei die Parameter für die Vorhersage der Bewegungsbahn (108) des zweiten Fahrzeugs (102) abhängig von der ersten Liste von Punkten, der zweiten Liste von Punkten, der dritten Liste von Punkten und der vierten Liste von Punkten bestimmt (208) werden und/oder wobei Parameter für die Vorhersage der Bewegungsbahn des dritten Fahrzeugs (103) abhängig von der ersten Liste von Punkten, der zweiten Liste von Punkten, der dritten Liste von Punkten und der vierten Liste von Punkten mit einem Modell für die Vorhersage der Bewegungsbahn des dritten Fahrzeugs (103) bestimmt (208) werden.

5. Verfahren nach Anspruch 4, **dadurch gekennzeichnet, dass** abhängig von dritten Daten, die durch den ersten Sensor in dem vorbestimmten ersten Zeitraum erfasst (202) werden, eine dritte Liste von Positionen des dritten Fahrzeugs (103) in dem ersten Zeitraum bestimmt (204) wird, wobei abhängig von vierten Daten, die durch den zweiten Sensor in dem vorbestimmten ersten Zeitraum erfassen (202) werden, eine vierte Liste von Positionen des dritten Fahrzeugs (103) in dem ersten Zeitraum bestimmt (204) wird, wobei die Parameter des Modells für das zweite Fahrzeug (102) und/oder die Parameter für das Modell für das dritte Fahrzeug (103) abhängig von der ersten Liste von Positionen, der zweiten Liste von Positionen, der dritten Liste von Positionen und der vierten Liste von Positionen bestimmt (206) werden.

6. Verfahren nach einem der vorhergehenden Ansprüche, **dadurch gekennzeichnet, dass** der erste Sensor und der zweite Sensor verschiedene Sensoren aus der Gruppe aus einem Radar-Sensor, einer Kamera und einem LiDAR-Sensor sind.

7. Verfahren nach einem der vorhergehenden Ansprüche, **dadurch gekennzeichnet, dass** die Parameter durch ein Verfahren der kleinsten Quadrate bestimmt (206) werden.

8. Verfahren nach einem der vorhergehenden Ansprüche, **dadurch gekennzeichnet, dass** die Vorhersage der Bewegungsbahn (108) durch quadratische Programmierung bestimmt (208) wird.

9. Verfahren nach einem der vorhergehenden Ansprüche, **dadurch gekennzeichnet, dass** die Vorhersage der Bewegungsbahn (108) abhängig von dem Fahrzeugmodell für einen zweiten Zeitraum von bis zu 0,4 Sekunden im Voraus und/oder abhängig von dem Fahrzeugmodell und abhängig von Daten, die in dem ersten Zeitraum für einen dritten Zeitraum von 0,4 bis 5 Sekunden im Voraus erfasst (210) werden, bestimmt wird.

10. Vorrichtung zum Vorhersagen der Bewegungsbahn eines Fahrzeugs (102), **dadurch gekennzeichnet, dass** die Vorrichtung einen Prozessor umfasst, der dazu ausgelegt ist, Eingabedaten von mindestens einem von zwei verschiedenen Sensoren aus der Gruppe aus einem Radarsensor, einer Kamera und einem LiDAR-Sensor zu verarbeiten und das Verfahren nach einem der Ansprüche 1 bis 9 auszuführen.

**Revendications**

1. Procédé de prédiction d'une trajectoire (108) pour un véhicule (102), dans lequel en fonction de premières données, qui sont capturées (202) par un premier capteur d'un premier véhicule (101), une première position, une première accélération, une première vitesse et une première vitesse de lacet d'un deuxième véhicule (102) est déterminé (204), dans lequel, en fonction de la première position, la première accélération, la première vitesse et la première vitesse de lacet, une première liste de points pour une prédiction de la trajectoire (108) est déterminée (206) avec un modèle de véhicule, **caractérisé en ce qu'**en fonction des deuxièmes données, qui sont capturées (202) par un deuxième capteur du premier véhicule (101), une deuxième position, une deuxième accélération, une deuxième vitesse et une deuxième vitesse de lacet du deuxième véhicule (102) sont déterminées (204), dans lequel, en fonction de la deuxième position, la deuxième accélération, la deuxième vitesse et la deuxième vitesse de lacet, une deuxième liste de points pour la prédiction de la trajectoire (108) est déterminée (206) avec le modèle de véhicule, dans lequel des paramètres d'un modèle pour la prédiction de la trajectoire (108) sont déterminés (208) en fonction de la première liste de points et de la deuxième liste de points, et dans lequel la prédiction de la trajectoire (108) est déterminée (210) en fonction du modèle défini par ces paramètres (210).

2. Procédé selon la revendication 1, **caractérisé en ce qu'**en fonction de premières données, capturées (202) par le premier capteur dans une première période de temps prédéterminée, une première liste de positions du deuxième véhicule (102) dans la première période de temps est déterminée (204), dans lequel, en fonction de deuxièmes données capturées (202) par le deuxième capteur dans la première période de temps prédéterminée, une deuxième liste de positions des deuxièmes véhicules (102) dans la première période de temps est déterminée (204), dans lequel les paramètres du modèle sont déterminés (208) en fonction de la première liste de positions et de la deuxième liste de positions.

3. Procédé selon la revendication 2, **caractérisé en ce qu'**une longueur de la première période de temps est entre 0,1 et 5 secondes, de préférence 1 seconde.

4. Procédé selon l'une des revendications précédentes, **caractérisé en ce qu'**en fonction de troisièmes données, qui sont capturées (202) par le premier capteur du premier véhicule (101), une troisième position, une troisième accélération, une troisième vitesse et une troisième vitesse de lacet d'un troisième véhicule (103) sont déterminées (204), dans lequel, en fonction de la troisième position, la troisième accélération, la troisième vitesse et la troisième vitesse de lacet, une troisième liste de points pour une prédiction de la trajectoire (108) est déterminée (206) avec le modèle de véhicule, dans lequel, en fonction de quatrièmes données, qui sont capturées (202) par le deuxième capteur du premier véhicule (101), une quatrième position, une quatrième accélération, une quatrième vitesse et une quatrième vitesse de lacet du quatrième véhicule (102) sont déterminées (204), dans lequel, en fonction de la quatrième position, la quatrième accélération, la quatrième vitesse et la quatrième vitesse de lacet, une quatrième liste de points pour la prédiction de la trajectoire (108) est déterminée (206) avec le modèle de véhicule, dans lequel les paramètres pour la prédiction de la trajectoire (108) du deuxième véhicule (102) sont déterminés (208) en fonction de la première liste de points, la deuxième liste de points, la troisième liste de points et la quatrième liste de points, et/ou dans lequel des paramètres pour la prédiction de la trajectoire du troisième véhicule (103) sont déterminés (208) en fonction de la première liste de points, la deuxième liste de points, la troisième liste de points et la quatrième liste de points avec un modèle pour la prédiction de la trajectoire du troisième véhicule (103).

5. Procédé selon la revendication 4, **caractérisé en ce qu'**en fonction de troisièmes données, capturées (202) par le premier capteur dans la première période de temps prédéterminée, une troisième liste de positions du troisième véhicule (103) dans la première période de temps est déterminée (204), dans lequel en fonction de quatrièmes données, capturées (202) par le deuxième capteur dans la première période de temps prédéterminée, une quatrième liste de positions du troisième véhicule (103) dans la première période de temps est déterminée (204), dans lequel les paramètres du modèle pour le deuxième véhicule (102) et/ou les paramètres pour le modèle pour le troisième véhicule (103) sont déterminés (206) en fonction de la première liste de positions, la deuxième liste de positions, la troisième liste de positions et la quatrième liste de positions.

6. Procédé selon l'une quelconque des revendications précédentes, **caractérisé en ce que** le premier capteur et le deuxième capteur sont des capteurs différents du groupe capteur radar, caméra et capteur LiDAR.

7. Procédé selon l'une quelconque des revendications précédentes, **caractérisé en ce que** les paramètres sont déterminés (206) par une méthode des moindres carrés.

8. Procédé selon l'une des revendications précédentes, **caractérisé en ce que** la prédiction de la trajectoire (108) est déterminée (208) par programmation quadratique.

9. Procédé selon l'une quelconque des revendications précédentes, **caractérisé en ce que** la prédiction de la trajectoire (108) est déterminée en fonction du modèle de véhicule pour une deuxième période de temps allant jusqu'à 0,4 seconde en avance et/ou en fonction du modèle de véhicule et en fonction de données capturées dans la première période de temps pour une troisième période de temps entre 0,4 et 5 secondes en avance (210).

10. Dispositif de prédiction d'une trajectoire d'un véhicule (102), **caractérisé en ce que** le dispositif comprend un processeur adapté au traitement de données d'entrée provenant d'au moins l'un de deux capteurs différents du groupe constitué de capteur radar, caméra et capteur LiDAR et à l'exécution du procédé selon l'une des revendications 1 à 9.

# Fig. 1

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107672589 A
- CN 108803617